# EUROPEAN PATENT APPLICATION

(11) **EP 4 818 240 A1**
(43) Date of publication of application: **07.10.2026**
(21) Application number: 25382313.2
(22) Date of filing: 31.03.2025
(51) Int. Cl.: C08J 5/24, H01M 50/229, C08K 3/22, C08K 5/3492, C08K 7/14, C08K 7/28, C08K 3/40, H01M 50/233, C08K 3/32, C08K 3/34

(54) **THERMOSET-BASED POLYMER COMPOSITE MATERIAL, METHOD OF MANUFACTURING AND ASSOCIATED USES THEREOF**

(71) Applicant: Fundación IMDEA Materiales, 28906, Getafe (Madrid) (ES)
(72) Inventor: WANG, De-Yi, 28906 Getafe (ES); AO, Xiang, 28906 Getafe (ES); LIU, Yunhuan, 28906 Getafe (ES)
(74) Representative: TRBL Intellectual Property

(57) **Abstract**

The present invention relates to a lightweight, high-strength, fire- and ablation-resistant polymer-based composite material comprising a polymer matrix and one or more functional fillers distributed therein, and a fiber reinforcement material. Their method of manufacturing comprises performing wet layup, spray layup, wet compression molding, prepreg compression molding, resin vacuum infusion process, or resin transfer molding. Finally, the invention can be used for automotive applications; specially, in vehicle battery pack systems.

## Description

### FIELD OF THE INVENTION

The present invention belongs to the technical field of fire and damage protection materials. More specifically, the invention relates to a lightweight, high-strength, fire- and ablation-resistant polymer-based composite material, its method of manufacturing, and associated uses thereof.

### BACKGROUND OF THE INVENTION

Fire and ablation damage-resistant materials, such as carbon and carbon composites, phenolic resin/carbon fibers, or ceramic materials, are frequently used in aerospace and refractory industries. However, their potential application to other sectors, such as the automotive industry, is yet to be fully developed.

For instance, in the context of passenger electric vehicles (EVs), it is known in the art that their traction battery pack systems suffer thermal runaway risks, which can produce a complex combination of simultaneously high velocity fire and abrasion particle impact damage to the vehicle, thereby bringing a major challenge to material design of its battery components. Furthermore, traction battery pack manufacturers aim for higher gravimetric energy density to get higher energy consumption efficiency, as well as greater driving mileage per battery charge, while requiring high-volume production rates. As a solution to this need, strong while lightweight polymer composite materials are increasingly being proposed or used in the industry as an alternative for their metal-based counterparts, in order to meet all the necessary functional and safety demands. Advantageously, these polymer composite materials also have versatile manufacturing methods, and are easy to shape and assembly.

Polymer composites especially use a thermoset polymer matrix with both lightweight and high-strength properties. The tailorability of monomer and curing agent composition with physical properties, such as wide viscosity window, endow the diverse and wide varieties of manufacturing methods of thermoset, making it one of the hot spots for the current market trends.

Also, in the aerospace industry, using phenolic resin/carbon fiber composites as ablation-resistant materials for rocket engine outer shells in re-entry applications is known in the art. However, to the knowledge of the inventors, there is no evidence so far that these materials would pass the high-velocity gas and particle impact damage tests required for this industry. Besides, using high-cost carbon fiber also limits its potential for broader and more scalable applications.

There are also known approaches based on using ceramic matrix/carbon fiber layers as fire- and ablation-resistant materials, but their protection is generally not sufficient when their thickness is less than 3 mm. In addition, even though they are naturally rigid materials with a high melting or fire points, they involve long manufacturing times with corresponding high energy demand, as well as shape-forming issues.

According to the prior art, patent application WO 2021/061516 A1 describes a heat-resistant fiber layer, mainly comprised of polycrystalline aluminosilicate fiber, to be used as a protection structure for thermal runaway-like damage scenarios. However, the fibrous materials disclosed in the application show little mechanical properties compared to fiber-reinforced thermoset composites, limiting structural support capabilities. Besides, handling fibrous materials introduces potential hazards to manual manufacturing or recycling processes.

Patent application US 2023/142691 A1 describes a hybrid composite material system for battery housing, using a fiber-reinforced thermoset composite with a metal layer on the exterior surface of the composite structure. The polymer matrix disclosed in the application has flame retardant fillers added as physical additives in the polymer composites. Besides, a thermal barrier material is also applied between the polymer composite and the metal layer by means of coating. However, introducing an external metal layer and middle thermal barrier layer needs more processing steps to form the hybrid structure for battery housing. Also, the introduced physical filler with a maximum 30 wt.% does negatively influence the viscosity of the thermoset, thereby bringing processing challenges. Furthermore, the enhanced thermal performance claimed by the application does only show resistance to high temperature ranges, from 500 to 1200°C fire damage, while not mentioning particle impact damages.

Patent application WO 2023/199012 A1 describes a hybrid structure comprising a functional layer using polymers with flame retardant fillers, refractory materials, and a reinforcement layer using inorganic fiber-based fabric or metal meshes. However, the reinforcement layer described in the application is only a single layer with limited fire resistance to the ever-growing fire risk of battery pack failure, which emitted a higher temperature over 1200°C with a longer damage period.

Hence, there is an emerging necessity for solving the vulnerability of thermoset polymer-based composite materials against high-velocity fire and/or fire and solid particles mixed ablation and impact damage, while fulfilling the mechanical properties and high processing capabilities required for a high-volume production rate for specific industries, especially the automotive sector.

### BRIEF DESCRIPTION OF THE INVENTION

The present invention proposes a novel material solution that is lightweight, high-strength, fire- and ablation-resistant, providing fire protection mitigation capabilities to be used as structural or semi-structural component for automotive and rolling stock applications while fulfilling the processing capabilities required for the high-volume production rates in the automotive sector.

Hence, the present invention relates, in a first aspect, to thermoset polymer-based composite materials comprising a polymer matrix and one or more flame-retardant fillers distributed therein; and a fiber reinforcement material.

In a preferred embodiment of the invention, the flame-retardant fillers comprise one or more phosphorus-based flame-retardant fillers. And, more preferably, the phosphorus-based flame-retardant filler comprises ammonium polyphosphate, melamine polyphosphate or piperazine polyphosphate. However, in the general context of the present invention, the term 'flame-retardant filler' shall be understood as any substance, compound or material, preferably in solid state, added to the polymer matrix to improve its fire protection capability, by inhibiting combustion through the suppression of fuel, oxygen, or temperature sources.

In a further preferred embodiment of the invention, the flame-retardant filler comprises a low-melting point glass filler and/or a synergist filler. In the context of the present invention, the term 'low-melting point glass' refers generally to a glass whose softening point is below 600°C. Also, a 'synergist' will be generally understood as any substance enhancing the flame retardant effect of the polymer matrix.

More preferably in the invention, the low-melting point glass filler comprises a calcium sodium phosphate glass, boron trioxide glass, a zinc borate glass, or a phosphate glass. And, also preferably in the invention, the synergist filler comprises silicate from kaolin clay, hollow micro-glass spheres, glass dust, frit glass fiber or short glass fiber.

In a further preferred embodiment of the invention, the fiber reinforcement material comprises a fabric made from a plurality of unidirectional or stitched fibers, a woven fabric, or a non-woven fabric. More preferably, the fiber reinforcement material comprises a fabric made of a plurality of any of the following fibers: a basalt fiber, a glass fiber, a carbon fiber, or an aluminum oxide fiber. And, even more preferably, in different embodiments of the invention the fibers comprise either a non-continuous fiber between 0.5 mm and 20 mm, or continuous fiber through the end-to-end of the final product.

In a further preferred embodiment of the invention, the polymer matrix further comprises a phosphorous-containing polymeric compatibilizer, added preferably in 3-30 part per hundred (pph). More preferably, the phosphorus-containing polymeric compatibilizer comprises at least one of the following phosphorous-containing functional groups: phosphate, phosphite, hypophosphite, phosphate ester, phosphonate, or phosphinate. However, in the context of the invention, a 'compatibilizer' shall be understood as any compound or substance with the capacity to alter the interphase between the polymer matrix and the flame-retardant filler and/or the reinforcement material, by reducing their interfacial tension and enhancing their domain adhesion.

In a further preferred embodiment of the invention, the thermoset polymer-based composite material comprises one or more of the following additives:
- a curing accelerator or retarder; and/or
- a viscosity diluent; and/or
- a pigment.

In a further preferred embodiment of the invention, the polymer matrix comprises a cured epoxy resin, a cured vinyl ester resin, or a cured unsaturated polyester resin.

In a second aspect, the invention relates to a battery enclosure comprising the thermoset polymer-based composite material herein described.

In a third aspect, the invention relates to a method of manufacturing the thermoset polymer-based composite material herein described, said method comprising performing wet layup, spray layup, wet compression molding, prepreg compression molding, resin vacuum infusion process, or resin transfer molding.

In a fourth aspect, the invention relates to the use of the thermoset polymer-based composite material herein described for battery pack systems and, preferably, for vehicle battery pack systems.

Other aspects and embodiments of the invention are described in the appended claims.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DETAILED DESCRIPTION OF THE INVENTION

The present invention provides a lightweight, high-strength, thermoset-based polymer composite material which can resist the damage caused by high-velocity fire and particle impacts, while fulfilling the processing capabilities required for the high-volume production rates in specific sectors. Said composite material comprises a polymer matrix, one or more flame-retardant filler materials distributed in the polymer matrix, and a fiber reinforcement material, wherein the composite material is advantageously formed as a layer having a thickness comprised preferably between 0.5 and 6 mm, a flexural strength in the range of 200-800 MPa, and a flexural modulus in the range of 8-20 GPa.

The polymer matrix can comprise, in different embodiments of the invention, a cured epoxy resin, a cured vinyl ester resin, or a cured unsaturated polyester resin.

Preferably, the polymer matrix can further comprise a phosphorous-containing polymeric compatibilizer. More preferably, the phosphorus-containing polymeric compatibilizer comprises at least one of the following functional groups: phosphate, phosphite, hypophosphite, phosphate ester, phosphonate, or phosphinate.

Preferably, the thermoset-based polymer composite material comprises a phosphorus-based flame-retardant filler. More preferably, the phosphorus-based flame-retardant filler comprises at least one selected from ammonium polyphosphate, melamine polyphosphate or piperazine polyphosphate. Even more preferably, the phosphorus-based flame-retardant filler is added in an amount ranged from 3 to 20 pph compared to 100 pph of thermoset resin.

The flame-retardant filler can further comprise a low-melting point glass filler and/or a synergist filler. In the context of the present invention, the term 'low-melting glass' preferably refers to a glass whose softening point is below 600°C.

In a preferred embodiment of the composite material of the invention, the low-melting point glass filler comprises at least one selected from a calcium sodium phosphate glass, boron trioxide glass, a zinc borate glass, or a phosphate glass. More preferably, the added amount of the low-melting point glass filler is ranged from 3 to 30 pph compared to 100 pph of thermoset resin.

In another preferred embodiment of the invention, the synergist filler comprises at least one selected from silicate from kaolin clay, hollow micro-glass spheres, glass dust, frit glass fiber or short glass fiber. More preferably, the added amount of the synergist filler is ranged from 3 to 20 pph compared to 100 pph of thermoset resin.

The thermoset composite material with phosphorus modification within molecular chain and functional fillers provide a particularly advantageous flame-retardant polymer material, showing improved self-extinguishing properties with low heat and smoke release upon external-fire induced ignition and combustions, compared to other known composite materials of the prior art.

The fiber reinforcement material comprises, preferably, a fabric made from a plurality of unidirectional or stitched fibers, a woven fabric, or a non-woven fabric, being the fibers preferably made from basalt, glass, carbon and/or aluminum oxide. The fibers have a preferred length comprised between 0.5 and 20 mm. The areal weight of the reinforcement fabric is preferably in the range of 100 to 800 gsm (grams per meter square). The thickness of the reinforcement fabric is preferably in the range of 0.5 mm to 4 mm. The density of the thermoset polymer-based composite is preferably in the range of 1.0 to 2.0 g/cm³.

In another preferred embodiment of the invention, the composite material comprises one or more of the following additives: a curing accelerator or retarder, a viscosity diluent, and/or a pigment. Using a thermoset monomer system and its phosphorous modified version with functional fillers and additives ensures the ease of manufacturing.

In a second aspect, the invention relates to a battery enclosure comprising the thermoset polymer-based composite material herein described. Preferably, the battery enclosure is an EV battery enclosure.

In a third aspect, the invention relates to a method of manufacturing the thermoset polymer-based composite material herein described, said method comprising performing wet layup, spray layup, wet compression molding, prepreg compression molding, resin vacuum infusion process, or resin transfer molding. Several examples of the process will be provided below, only for illustrative purposes, and subject to variations identifiable to the skilled person without departing from the scope of the invention.

In a preferred embodiment of the invention, the manufacturing method comprises performing wet layup and, more preferably, performing the following steps:
(1) premixing a polymer resin with a curing agent, optionally with a curing accelerator or retarder, a viscosity diluent, pigments, and one or more fillers in mold cavity;
(2) depositing a first fiber reinforcement layer over the surface of mold cavity;
(3) wetting the first fiber reinforcement layer;
(4) repeating steps (2) and (3) until a stack of fiber reinforcement layers with a thickness between 0.5-6.5 mm is obtained;
(5) applying vacuum or using hot press machinery, so that a pre-compacted wetted multilayer structure is obtained;
(6) curing the pre-compacted wetted multilayer structure under relative vacuum pressure around -0.9 bar, or under positive pressure from a hot press machinery so that the thermoset polymer-based composite material is obtained.

In a further preferred embodiment of the invention, the manufacturing method comprises performing spray layup and, more preferably, performing the following steps:
(1) premixing a polymer resin with a curing agent and one or more fillers;
(2) conveying a fiber roving simultaneously into a fiber chopper and cutting into short fiber reinforcement (15~75 mm) and transporting it with the liquid resin mixture onto the contour of the mold surface. By doing this, one layer of impregnated fiber reinforcement will be evenly spread on the mold surface;
(3) compacting the fiber reinforcement layer using a roller;
(4) repeating steps (2) and (3) until the designated thickness is reached;
(5) curing the material inside the mold.

In a further preferred embodiment of the invention, the manufacturing method comprises performing wet compression molding and, more preferably, performing the following steps:
(1) transporting a precut continuous fiber layer, or nonwoven felt, or mat with the desired layer amount to a designated mold, either manually or by using appropriate machinery.
   a. Optionally, the female part of the mold for forming the shape of composite materials is pre-surface treated for easier mold release.
   b. A resin-rich surface finishing layer may be applied to the treated mold surface first before the wet compression molding process;
(2) mixing a liquid resin with a curing agent or catalyst, and optionally with a curing accelerator or retarder, a viscosity diluent, pigments, functional fillers, and synergists, and injecting or adding them above the surface of the mold through designated channels or tubes with calculated volumes;
(3) clamping the male part of the mold above the female part of the mold, and heating the whole mold so the materials can be cured under pressure and high temperature to be cured;
(4) retrieving the cured composite from the mold, preferably being checked, trimmed, and polished to get the final product.

In a further preferred embodiment of the invention, the manufacturing method comprises performing prepreg compression molding and, more preferably, performing the following steps:
(1) premixing a polymer resin with a curing agent and one or more fillers;
(2) pre-impregnating the mixture obtained in step (1) with a fiber reinforcement material;
(3) cutting the fiber reinforcement material obtained in step (2) into layers;
(4) sequentially laying the layers obtained in step (3) upon each other above the mold cavity;
(5) sealing the multilayer structure obtained in step (4) under vacuum using vacuum bagging system;
(6) transporting the compacted structure obtained in step (5) into a mold cavity;
(7) curing the compacted structure using hot-press-like machinery.

In a further preferred embodiment of the invention, the manufacturing method comprises performing a resin vacuum infusion process and, more preferably, performing the following steps:
(1) cutting a plurality of fiber reinforcement layers and sequentially laying said layers upon each other;
(2) positioning the stack of layer obtained in step (1) above a mold cavity;
(3) using auxiliary materials like sealant tape, vacuum bag film, and inlet and outlet tubes for vacuum resin injection, release film layer, and resin flow accelerator layer to prepare a vacuum-sealing device, which will cloak the fabric reinforcements inside of it;
(4) connecting the vacuum to the outlet tube of resin injection, while the inlet tube is clamped, so as to introduce a compact vacuum force that compresses the fabric layers to get rid of most of the void between fabric layers;
(5) injecting the resin mixtures with curing agent or catalyst, optionally with a curing accelerator or retarder, a viscosity diluent, pigments, functional fillers, or synergists through the inlet tube, driven by the pressure difference between the feed liquid resin outside the vacuum-sealing device and the negative pressure inside of the vacuum-sealing device, which will wet and impregnate the fabric layers;
(6) clamping the resin inlet and out, after the full area of fabrics is wetted by the liquid resin;
(7) moving the whole setup into an oven for curing under temperature and vacuum-generated pressure;
(8) retrieving the cured composite from the mold, checked, trimmed, and polished to get the final product.

In a further preferred embodiment of the invention, the method comprises performing resin transfer molding and, more preferably, performing the following steps:
(1) surface-treating a two-part mold cavity;
(2) optionally applying a resin-rich surface finishing layer to one part of the pre-surface treated two-part mold cavity;
(3) cutting the fiber reinforcement layers, laying upon each other, and positioning said layers above the pre-surface treated two-part mold cavity;
(4) closing the two-part mold;
(5) infusing or injecting a mixture comprising a polymer resin with a curing agent and one or more fillers into the closed cavity of the two-part mold using either only negative vacuum pressure from the outlet location or positive pressure from inlet location or the combination of both pressure;
(6) heating the mold so that the polymer resin is cured.

The thermoset-based polymer composite material obtained through the method of the invention advantageously withstands damage from a high-velocity fire with around 2-6 kW energy output and particle impact from aluminum oxide (70-200 mesh size range) at a speed of 1.0-3.0 g/s. For the combinations of a polymer matrix, a flame-retardant filler and a reinforcement fiber disclosed in the invention, the high-velocity fire resistance was tested for several cycles of 10-20 seconds until samples failed, wherein the fire was set at 60 mm from a sample of the composite material at the above-mentioned conditions. Then, a set of various cycles of 3-10 seconds of simultaneous fire damage and particle impact damage at the above-mentioned conditions was applied. As a result, the thermoset-based polymer composite material of the invention withstood at least 10-25 cycles of the aforementioned cyclic damage of both fire and particle impacts, without backside having fire ignition due to quick thermal transfer or proliferation due to fire damage.

In a fourth aspect, the invention relates to the use of the thermoset polymer-based composite material herein described for traction battery pack systems and, preferably, for EV battery pack systems. In the context of the invention, any traction or propulsion land, sea, air or space vehicle using battery packs, either for main or auxiliary powering, can be benefitted by the composite materials disclosed herein.

### Examples of composite materials of the invention

The following subsections describe further preferred embodiments of the composite materials of the invention, which are to be construed as merely illustrative and not limitative of the scope of the invention.

### Example 1: Thermoset epoxy matrix composite material

100 pph aliphatic and cycloaliphatic type epoxy resin, such as commercial code Resoltech^{™} 1800 ECO, was first mixed with 10pph phosphorus-containing polymeric with phosphonate group compatibilizer to form a liquid resin. After that, the above mixture was added with 26 pph amine type latent curing agent, 10 pph ammonium polyphosphate-based flame retardant filler, 20 pph calcium sodium phosphate glass, as well as 5 pph kaolin clay-based synergist sequentially to form a mixed liquid resin system with ~3000 cps viscosity at 60°C. The above mixtures were transferred to an impregnation bath, where basalt fiber-based fabric was immersed in a resin bath. After that, the excessive liquid resin was squeezed out to form a latent curing epoxy resin impregnated with glass fiber prepregs. The basalt fiber-based fabric has a weight of 220 g/m² before impregnation.

Then 12 layers of prepreg were then stacked with layup sequence [0/+45/90/-45]₂ₙ on the cavity of the molds and pre-compacted by vacuum pressure using vacuum bagging to get rid of voids, thereby forming pre-consolidated fabric preforms. Then, the pre-consolidated fabric preforms within the vacuum bagging system were transferred to the oven to fully cure at a temperature of 100°C and time 20 minutes to get laminate around ~2 mm.

The produced composite with around 2mm thickness had a flexural strength of around 450 MPa and a flexural modulus of around 16 GPa. When subject to fire and particle impact damages as described by the Torch and Grit test in UL2596, the laminate could sustain more than 25 cycles without backside on self-ignition or proliferation.

### Example 2: Thermoset vinyl ester matrix composite material

The vinyl ester resin, such as commercial code Derakane^{®} 8084, was mixed with the 3 pph peroxide-based compound and 0.6 pph cobalt-based organic compound accelerator, 15 pph phosphorus-containing polymeric with phosphate group compatibilizer, 5 pph melamine polyphosphate, 10 pph boron trioxide glass as well as 10 pph frit glass fiber. In the meantime, eight layers of glass fiber-based plain-woven fabric with a weight of 220 g/m² with an area weight of 275 g/m² and 4 layers of carbon fiber-based plain-woven fabric with area weight 375 g/m² were cut into desired size and stacked with layup sequence [0/+45/90/-45]₂ₙ inside the mold cavities to prepare the vacuum infusion method. The mixed resin was then infused and impregnated with the glass fiber-based fabric using vacuum infusion methods with a relative vacuum pressure of around -0.9 bar. Then, the whole system was transferred to an oven for curing at 90°C for 30 minutes.

The produced composite with around 2mm thickness had a flexural strength of around 400 MPa and a flexural modulus of around 18 GPa. When subject to fire and particle impact damages as described by the Torch and Grit test in UL2596, the laminate could sustain more than 20 cycles without backside on self-ignition or proliferation.

### Example 3: Thermoset unsaturated polyester matrix composite material

The unsaturated polyester resin, such as commercial code Crestafire^{®} P1-3002PA, was mixed with 2 phr catalyst, 5 pph phosphorus-containing polymeric with phosphite group compatibilizer, 8 pph piperazine polyphosphate, 8 pph zinc borate glass as well as 10 pph short glass fibers. In the meantime, eight layers of glass fiber-based plain-woven fabric with an area weight of 275 g/m² and 4 layers of carbon fiber-based plain-woven fabric were cut into desired size and stacked with layup sequence [0/+45/90/-45]₂ₙ inside the mold cavities to prepare the resin transfer molding method. The mixed resin was then infused and impregnated with the glass fiber-based fabric using the resin transfer method with a positive pressure of around 15 bars.

The produced composite with around 2mm thickness had a flexural strength of around 500 MPa and a flexural modulus of around 19 GPa. When subject to fire and particle impact damages as described by the Torch and Grit test in UL2596, the laminate could sustain more than 23 cycles without backside self-ignition or proliferation.

## Claims

1. A thermoset polymer-based composite material comprising:
- a polymer matrix and one or more flame-retardant fillers distributed therein; and
- a fiber reinforcement material.

2. The thermoset polymer-based composite material according to claim 1, comprising a phosphorus-based flame-retardant filler.

3. The thermoset polymer-based composite material according to claim 2, wherein the phosphorus-based flame-retardant filler comprises at least one selected from ammonium polyphosphate, melamine polyphosphate and piperazine polyphosphate.

4. The thermoset polymer-based composite material according to claim 1-3, wherein the polymer matrix comprises a phosphorus-containing polymeric compatibilizer based on at least one selected from the following phosphorous-containing functional groups: phosphate, phosphite, hypophosphite, phosphate ester, phosphonate, and phosphinate.

5. The thermoset polymer-based composite material according to any of claims 1-4, further comprising at least one selected from a low-melting point glass filler and a synergist filler.

6. The thermoset polymer-based composite material according to claim 5, wherein the low-melting point glass filler comprises at least one selected from calcium borophosphate glass, a zinc borate glass, and a phosphate glass.

7. The thermoset polymer-based composite material according to claim 5 or 6, wherein the synergist filler comprises at least one selected from silicate from kaolin clay, hollow micro-glass spheres, glass dust, frit glass fiber and short glass fiber.

8. The thermoset polymer-based composite material according to any of claims 1 to 7, wherein the fiber reinforcement material comprises at least one selected from a fabric made from a plurality of unidirectional or stitched fibers, a woven fabric, or a non-woven fabric.

9. The thermoset polymer-based composite material according to claim 8, wherein the fiber reinforcement material comprises a fabric made of a plurality of any of the following fibers: a basalt fiber, a glass fiber, a carbon fiber, and an aluminum oxide fiber.

10. The thermoset polymer-based composite material according to claim 8 or 9, wherein the length of the fibers is comprised between 0.5 mm and 40 mm.

11. The thermoset polymer-based composite material according to any of claims 1 to 10, wherein the polymer matrix further comprises 3-30 pph of a phosphorous-containing polymeric compatibilizer.

12. The thermoset polymer-based composite material according to any of claims claim 1 to 11, wherein the polymer matrix comprises at least one selected from a cured epoxy resin, a cured vinyl ester resin, or a cured unsaturated polyester resin.

13. A battery pack enclosure comprising the thermoset polymer-based composite material according to any of claims 1 to 12.

14. Method of manufacturing the thermoset polymer-based composite material according to any of claims 1 to 12, said method comprising performing wet layup, spray layup, wet compression molding, prepreg compression molding, resin vacuum infusion process, or resin transfer molding on the polymer matrix, the flame-retardant fillers and the fiber reinforcement material.

15. Use of the thermoset polymer-based composite material according to claims 1-12 for vehicle battery pack systems.
